# EUROPÄISCHE PATENTSCHRIFT

(11) **EP 2 840 285 B1**
(45) Veröffentlichungstag und Bekanntmachung des Hinweises auf die Patenterteilung: **19.04.2017**
(21) Anmeldenummer: 13004183.3
(22) Anmeldetag: 24.08.2013
(51) Int. Cl.: F16K 24/06, F02M 37/00

(54) **Belüftungsventil für einen Flüssigkeitsbehälter**
Aerating valve for a fluid container
Vanne d'aération pour un récipient de fluide

(43) Veröffentlichungstag der Anmeldung: 25.02.2015
(73) Patentinhaber: Andreas Stihl AG & Co. KG, 71336 Waiblingen (DE)
(72) Erfinder: Steffen, Joos, 71711 Murr (DE)
(74) Vertreter: Wasmuth, Rolf

(56) Entgegenhaltungen:
- DE-A1- 10 334 480
- GB-A- 1 019 261
- JP-A- H02 300 577
- JP-A- 2001 314 285
- US-A1- 2006 169 146

## Beschreibung

Die Erfindung betrifft ein Belüftungsventil für einen Flüssigkeitsbehälter, insbesondere für einen Kraftstoffbehälter in einem handgeführten Arbeitsgerät.

Ein Belüftungsventil dieser Gattung wird insbesondere für einen Kraftstoffbehälter in einer Motorkettensäge, einem Trennschleifer, einem Freischneidegerät, einem Blasgerät, einer Heckenschere oder dergleichen verwendet und soll einerseits eine ausreichende Belüftung des Kraftstoffbehälters sicherstellen und andererseits unabhängig von der Gebrauchslage des Arbeitsgerätes gewährleisten, dass kein Kraftstoff durch das Belüftungsventil austritt.

Ein derartiges Belüftungsventil ist aus der DE 103 34 480 A1 bekannt. Es besteht aus einem Ventilgehäuse sowie einem im Ventilgehäuse angeordneten Ventilglied, das einen Druckausgleichskanal steuert. Der Druckausgleichskanal verbindet den Behälterinnenraum mit der Behälteraußenseite, das heißt der unmittelbaren äußeren Umgebung, um einen Druckausgleich zu gewährleisten. Um das Ventilglied frei von Schmutz zu halten, ist im Ventilgehäuse ein luftdurchlässiger Filterkörper vorgesehen, der den Druckausgleichskanal abdeckt und mit einer Seite dem Behälterinnenraum zugewandt liegt.

Der dem Behälterinnenraum zugewandt liegende Filterkörper wird in seiner Lage am Ventilgehäuse durch einen Sicherungsring gehalten. Dabei bleibt ein Großteil der dem Behälterinnenraum zugewandt liegenden Fläche frei.

Insbesondere beim Einsatz des Belüftungsventils bei einem Kraftstoffbehälter hat sich in der Praxis gezeigt, dass im Flüssigkeitsbehälter befindlicher Schmutz sich in den Filterkörper einlagert und dessen Funktion beeinträchtigt. Dabei kann es vorkommen, dass im Kraftstoff befindlicher Schmutz den Filterkörper durchdringt und die Funktion des Ventils beeinträchtigt.

Der Erfindung liegt die Aufgabe zugrunde, ein gattungsgemäßes Belüftungsventil für einen Flüssigkeitsbehälter derart auszubilden, dass eine Einlagerung von Schmutzteilchen in dem im Behälterinnenraum liegenden Filterkörper vermieden ist.

Die Aufgabe wird erfindungsgemäß nach den Merkmalen des Anspruchs 1 gelöst.

Der Filterkörper ist auf der dem Behälterinnenraum zugewandten Seite durch ein weiteres Filterelement abgedeckt, das im Wesentlichen die Öffnung des Ventilgehäuses zum Behälterinnenraum verschließt und dadurch den Filterkörper selbst abdeckt. In der Flüssigkeit befindliche Schmutzteilchen werden so durch das weitere Filterelement an einer Einlagerung im Filterkörper gehindert. Die Standzeit des Belüftungsventils ist verbessert.

Das Material des Filterkörpers weist eine erste Porengröße auf und das Material des weiteren Filterelementes eine zweite Porengröße. Dabei ist vorgesehen, dass die zweite Porengröße des weiteren Filterelementes kleiner, insbesondere deutlich kleiner ist, als die erste Porengröße des Filterkörpers selbst. Dadurch wird sichergestellt, dass in der Flüssigkeit befindliche Schmutzteilchen sich nicht in den größeren Poren des Filterkörpers einlagern können.

Das weitere Filterelement besteht zweckmäßig aus einem Kunstfasergewebe, insbesondere aus einem Polyester-Spinnvlies, welches auch unter der Bezeichnung Parafil® bekannt ist. Dieses Kunstfasergewebe hat einerseits eine ausreichende Luftdurchlässigkeit und gewährleistet andererseits das Zurückhalten von Schmutzteilchen in der Flüssigkeit. Darüber hinaus ist ein aus einem derartigen Material bestehendes Filterelement in hohem Maße formstabil und dabei ausreichend elastisch.

Vorzugsweise deckt das weitere Filterelement die dem Behälterinnenraum zugewandte Seite des Filterkörpers im Wesentlichen vollständig ab.

Der Filterkörper im Ventilgehäuse ist zweckmäßig ein zylindrischer Schaumstofffilter, während das weitere Filterelement aus einem Kunstfasergewebe insbesondere als Stanzteil ausgebildet sein kann. Das weitere Filterelement wird als Sicherungselement für den Filterkörper des Ventilgehäuses genutzt. Es kann aus einem formstabilen, biegeelastischem Material bestehen. Das Sicherungselement ist dabei vorzugsweise als Sicherungsscheibe ausgebildet, zweckmäßig als runde Sicherungsscheibe. Das als Sicherungselement genutzte weitere Filterelement hat eine Dicke, die etwa 5 bis 10 % der Dicke des Filterkörpers entspricht.

Weitere Merkmale der Erfindung ergeben sich aus den weiteren Ansprüchen, der Beschreibung und der Zeichnung, in der ein nachfolgend im Einzelnen beschriebenes Ausführungsbeispiel der Erfindung dargestellt ist. Es zeigen:
- Fig. 1: einen schematischen Schnitt durch ein in einer Behälterwand montiertes Belüftungsventil,
- Fig. 2: eine Draufsicht auf das in der Behälterwand liegende Belüftungsventil in Pfeilrichtung II aus Fig. 1,
- Fig. 3: in schematischer Darstellung ein in einer Kraftstoffbehälterwand montiertes Belüftungsventil.

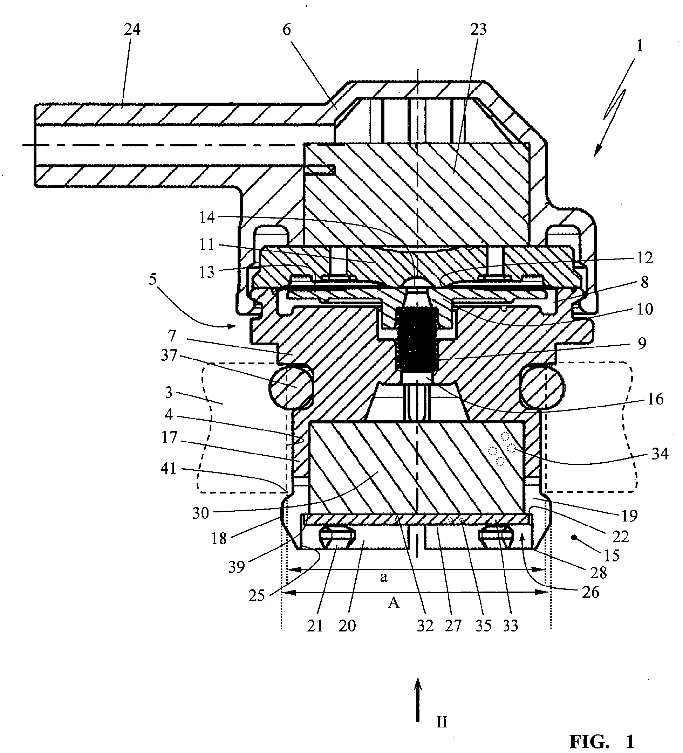

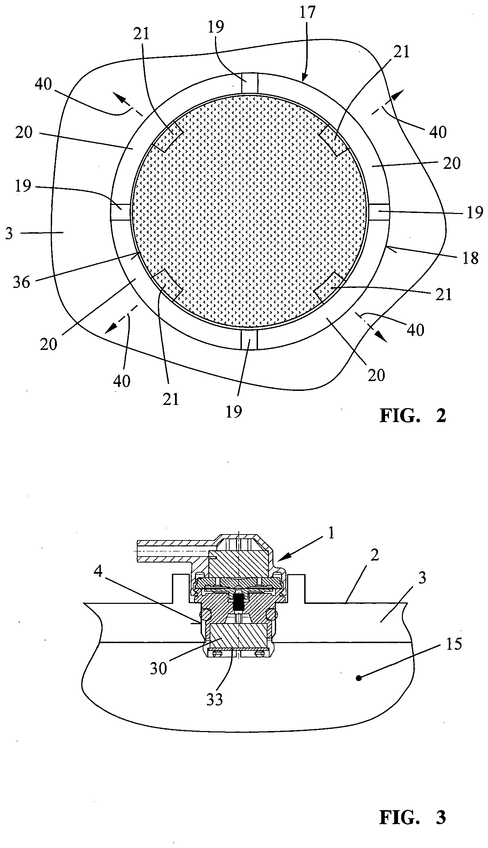

In Fig. 1 ist im Querschnitt ein Belüftungsventil 1 für einen Flüssigkeitsbehälter 2 (Fig. 3) gezeigt, der im Ausführungsbeispiel als Kraftstoffbehälter ausgeführt ist, aber auch ein Behälter für Schmieröl, Kettenöl oder dergleichen sein kann. In der Behälterwand 3 des Flüssigkeitsbehälters 2 ist eine Montageöffnung 4 für das Belüftungsventil 1 vorgesehen.

Das Belüftungsventil 1 ist in einem Ventilgehäuse 5 angeordnet, das sich aus einem Ventildeckel 11 und einem Grundkörper 7 zusammensetzt. Zwischen dem Ventildeckel 11 und dem Grundkörper 7 ist ein Aufnahmeraum 8 ausgebildet, in dem ein Ventilteller 10 angeordnet ist. Der Ventilteller 10 ist durch eine Schraubenfeder 9 mit einer vorgegebenen Kraft gegen einen Dichtsitz 12 gedrückt, der an dem den Aufnahmeraum 8 verschließenden Ventildeckel 11 ausgebildet ist. Zwischen dem Ventilteller 10 und dem Dichtsitz 12 ist eine Dichtmembran 13 angeordnet, die vorteilhaft aus einer Kunststofffolie besteht und eine mittige Membranöffnung 14 aufweist. Durch die Schraubenfeder 9 wird der Ventilteller 10 mit der Dichtmembran 13 fest gegen den Dichtsitz 12 gedrückt, wodurch ein in den Behälterinnenraum 15 mündender Druckausgleichskanal 16 dicht verschlossen wird.

Der im Bereich des Ventiltellers 10 zylindrisch ausgebildete Grundkörper 7 weist einen einteilig angeformten, axial sich in Richtung des Behälterinnenraums 15 erstreckenden Anschlussstutzen 17 auf, der im montierten Zustand in der Montageöffnung 4 der Behälterwand 3 gehalten ist. Eine umlaufende äußere Rastkante 18 am freien Ende des Anschlussstutzens 17 hintergreift eine Innenkante 41 der Behälterwand 3 auf der Behälterinnenseite 15, wodurch das Belüftungsventil 1 formschlüssig in der Montageöffnung 4 am Flüssigkeitsbehälter 2 (Fig. 3) fixiert ist.

Der Anschlussstutzen 17 weist in seiner Stutzenwand Axialschlitze 19 auf, die sich etwa über die halbe Höhe des Anschlussstutzens 17 erstrecken. Über den Umfang des Anschlussstutzens 7 sind, wie Fig. 2 zeigt, vier Axialschlitze 19 vorgesehen, so dass die Stutzenwand über den Umfang in vier Rastzungen 20 aufgeteilt ist. Die Rastzungen 20 haben in Umfangsrichtung eine etwa gleiche Erstreckung; je zwei Axialschlitze 19 liegen einander etwa diametral gegenüber. Auf ihrer Außenseite trägt jede Rastzunge die Rastkante 18; auf der Innenseite einer Rastzunge 20 ist zumindest eine Rastnase 21 vorgesehen, die radial in die Öffnung 25 des Anschlussstutzens ragt. Unterhalb der Rastnasen 21 ist in der Stutzenwand bzw. den Rastzungen eine umlaufende Schulter 22 ausgebildet.

Zum Schutz des Druckausgleichskanals 16 und insbesondere des Dichtsitzes 12 vor Verschmutzung durch Staubpartikel oder dergleichen ist das Ventilgehäuse 5 von einer Abdeckkappe 6 übergriffen, welche zugleich den Ventildeckel 11 auf dem Grundkörper 7 hält. Die Abdeckkappe 6 ist auf dem Grundkörper 7 verrastet festgelegt; in der Abdeckkappe 6 ist ein Luftfilter 23 vorgesehen. Die Abdeckkappe 6 kann mit einem Anschlussstutzen 24 versehen sein, der zum Beispiel an den Reinraum eines Luftfilters angeschlossen ist.

Der Druckausgleichskanal 16 zum Behälterinnenraum 15 mündet etwa zentral in den Anschlussstutzen 17 und ist durch einen luftdurchlässigen Filterkörper 30 abgedeckt. Der Filterkörper 30 ist in dem Anschlussstutzen 17 aufgenommen. Eine Seite des Filterkörpers 30 ist dem Behälterinnenraum 15 zugewandt. Im gezeigten Ausführungsbeispiel ist der Filterkörper 30 ein zylindrischer Filterkörper und besteht insbesondere aus Schaumstoff, dessen eine Stirnseite 31 den Druckausgleichskanal abdeckt und dessen andere Stirnseite 32 dem Behälterinnenraum 15 zugewandt liegt. Der Filterkörper 30 füllt den Anschlussstutzen 24 im Wesentlichen vollständig aus, wobei die dem Behälterinnenraum 15 zugewandte Seite des Filterkörpers 30 durch ein weiteres Filterelement 33 abgedeckt ist. Das Filterelement 33 verschließt die Öffnung 25 des Ventilgehäuses 5, im Ausführungsbeispiel die Öffnung 25 des Anschlussstutzens 17 zum Behälterinnenraum 15 weitgehend vollständig.

Das Material des Filterkörpers 30 weist eine erste Porengröße 34 auf; das Material des weiteren Filterelementes 32 weist eine zweite Porengröße 35 auf. Wie im Ausführungsbeispiel gezeigt, ist die zweite Porengröße 35 des weiteren Filterelementes 32 zweckmäßig kleiner als die erste Porengröße 34 des Filterkörpers 30.

Der Filterkörper 30 ist ein vorzugsweise zylindrischer Schaumstofffilter. Das weitere Filterelement ist zweckmäßig aus einem Kunstfasergewebe gebildet und besteht zum Beispiel aus einem Polyester-Spinnvlies, welches unter der Bezeichnung Parafil® bekannt ist. Wie insbesondere Fig. 2 zeigt, deckt das weitere Filterelement 33 die dem Behälterinnenraum 15 zugewandte Seite des Filterkörpers 30 über einen Großteil der Seitenfläche ab. Im Ausführungsbeispiel ist die Stirnseite 32 des Filterkörpers 30 vollständig von dem weiteren Filterelement 33 abgedeckt.

Das weitere Filterelement 33 ist insbesondere als biegeelastisches Formteil ausgebildet, das als Sicherungselement 26 den Filterkörper 30 in seiner Lage am Ventilgehäuse 5 bzw. im Anschlussstutzen 17 des Ventilgehäuses 5 hält.

Zweckmäßig ist das Sicherungselement als Sicherungsscheibe 27 ausgebildet, insbesondere als runde Sicherungsscheibe. Da das Filterelement 33 aus einem weitgehend form-stabilen Kunstfasergewebe besteht, ist es in einfacher Weise als Stanzteil herstellbar, wobei dieses Stanzteil vorteilhaft die runde Sicherungsscheibe 27 bildet.

Die im offenen Ende 28 des Anschlussstutzens 17 des Ventilgehäuses 5 ausgebildete innere Schulter 22 dient als Auflagefläche 39 für das Sicherungselement 26, insbesondere der Sicherungsscheibe 27.

Der Filterkörper 30 ist derart ausgebildet, dass er den Anschlussstutzen 24 radial vollständig füllt und sich axial bis zur Auflagefläche 39 bzw. der Schulter 22 erstreckt. Es kann zweckmäßig sein, wenn der Filterkörper 30 geringfügig über die Auflagefläche 39 übersteht. Das formstabile, weitere Filterelement 33 wird als Sicherungselement 26 in das offene Ende 28 des Anschlussstutzens 17 des Ventilgehäuses 5 eingeklipst. Hierbei weichen die Rastzungen 20 in Pfeilrichtung 40 (Fig. 2) radial nach außen aus, bis der Rand 36 des Sicherungselementes 26 die Rastnasen 21 der Rastzungen 20 überwinden und die Rastzungen 20 entgegen Pfeilrichtung 40 zurückfedern. Das weitere Filterelement 33 liegt als Sicherungselement 26 mit seinem Rand 36 auf der Auflagefläche 39 auf. In dieser Lage wird das weitere Filterelement 33 durch die Rastnasen 21 der Rastzungen 20 fixiert, wozu die Rastnasen den Rand 36 des Sicherungselementes 26 übergreifen. Das ein Sicherungselement 26 bildende Filterelement 33 ist unverlierbar am Ventilgehäuse 5 gehalten. Da das weitere Filterelement 33 als Sicherungselement 26 zugleich die unverlierbare Lage des Filterkörpers 30 am Ventilgehäuse 5 sichert, erfüllt es eine Doppelfunktion.

Die Montageöffnung 4 in der Behälterwand 2 hat einen Innendurchmesser a, der geringer ist als der an der Rastkante 18 gemessene Außendurchmesser A des Anschlussstutzens 17 des Ventilgehäuses 5 (Fig. 1). Wird das montierte Belüftungsventil 1 in die Öffnung 4 der Behälterwand 3 des Flüssigkeitsbehälters 2 (Fig. 3) eingedrückt, werden die Rastzungen 20 entgegen Pfeilrichtung 40 (Fig. 2) radial nach innen verdrängt. Da das weitere Filterelement 33 als Sicherungselement 26 zwar formstabil aber biegeelastisch ist, ist die Ausweichbewegung der Rastzungen 20 entgegen der Pfeilrichtung 40 nicht behindert. Das biegeelastische Sicherungselement 26 verformt sich elastisch.

Sobald die äußere Rastkanten 18 der Rastzungen 20 die Innenkante 41 der Montageöffnung 4 hintergreifen, federn die Rastzungen 20 - unterstützt durch die in ihre Ursprungsform zurückgehende Sicherungsscheibe 27 - in ihre Ausgangslagen zurück und hintergreifen die Innenkante 41. Das Belüftungsventil 1 ist unverlierbar in der Montageöffnung 4 gehalten, wobei ein in der Montageöffnung 4 liegender Dichtungsring 37, der im Ausführungsbeispiel als O-Ring ausgeführt ist, das Ventilgehäuse 5 in der Montageöffnung 4 abdichtet.

Nach der Verschnappung des Belüftungsventils 1 in der Montageöffnung 4 der Behälterwand 3 unterstützt die Sicherungsscheibe 27 infolge ihrer Steifigkeit die Raststellung der Rastzungen 20, wodurch ein sicherer Sitz des Belüftungsventils 1 in der Montageöffnung 4 des Flüssigkeitsbehälters 2 gewährleistet ist.

Da der weitere Filterkörper 33 aus einem Material besteht, welches weiterhin einen Druckausgleich zulässt und darüber hinaus feinporiger ist als das Material des Filterkörpers 30, wird gewährleistet, dass im Flüssigkeitsbehälter 2 vorhandener Schmutz nicht in das Ventilgehäuse 5 eindringen kann.

## Patentansprüche

1. Belüftungsventil für einen Flüssigkeitsbehälter (2),
mit einem Ventilgehäuse (5)
• sowie mit einem im Ventilgehäuse (5) angeordneten Ventilglied,
• wobei das Ventilglied einen den Behälterinnenraum (15) mit der Behälteraußenseite verbindenden Druckausgleichskanal (16) steuert,
• und mit einem im Ventilgehäuse (5) gehaltenen luftdurchlässigen Filterkörper (30),
• wobei der Filterkörper (30) den Druckausgleichskanal (16) abdeckt,
• und eine Seite des Filterkörpers (30) dem Behälterinnenraum (15) zugewandt liegt,
**dadurch gekennzeichnet,**
• **dass** der Filterkörper (30) auf der dem Behälterinnenraum (15) zugewandten Seite durch ein weiteres Filterelement (33) abgedeckt ist,
• **dass** das weitere Filterelement (33) als Sicherungselement (26) für den Filterkörper (33) ausgebildet ist,
• und **dass** das weitere Filterelement (33) die Öffnung des Ventilgehäuses (5) zum Behälterinnenraum (15) verschließt.

2. Belüftungsventil nach Anspruch 1,
**dadurch gekennzeichnet, dass** das Material des Filterkörpers (30) eine erste Porengröße (34) aufweist und das Material des weiteren Filterelementes (33) eine zweite Porengröße (35) aufweist, wobei die zweite Porengröße (35) des weiteren Filterelementes (33) kleiner ist als die erste Porengröße (34) des Filterkörpers (30).

3. Belüftungsventil nach Anspruch 1 oder 2,
**dadurch gekennzeichnet, dass** das weitere Filterelement (33) aus einem Kunstfasergewebe besteht.

4. Belüftungsventil nach Anspruch 3,
**dadurch gekennzeichnet, dass** das Kunstfasergewebe ein Polyester-Spinnvlies ist.

5. Belüftungsventil nach einem der Ansprüche 1 bis 4,
**dadurch gekennzeichnet, dass** das weitere Filterelement (33) die dem Behälterinnenraum (15) zugewandte Seite des Filterkörpers (30) vollständig abdeckt.

6. Belüftungsventil nach Anspruch 1,
**dadurch gekennzeichnet, dass** der Filterkörper (30) ein Schaumstofffilter ist.

7. Belüftungsventil nach Anspruch 6,
**dadurch gekennzeichnet, dass** der Schaumstofffilter zylindrisch ist.

8. Belüftungsventil nach einem der Ansprüche 1 bis 7,
**dadurch gekennzeichnet, dass** das weitere Filterelement (33) ein Stanzteil ist.

9. Belüftungsventil nach einem der Ansprüche 1 bis 8,
**dadurch gekennzeichnet, dass** das weitere Filterelement (33) ein biegeelastisches Formteil ist.

10. Belüftungsventil nach einem der Ansprüche 1 bis 9,
**dadurch gekennzeichnet, dass** das Sicherungselement (26) als Sicherungsscheibe (27) ausgeführt ist.

11. Belüftungsventil nach Anspruch 10,
**dadurch gekennzeichnet, dass** das Sicherungselement (26) als runde Sicherungsscheibe (27) ausgeführt ist.

12. Belüftungsventil nach einem der Ansprüche 1 bis 11,
**dadurch gekennzeichnet, dass** das Sicherungselement (26) zwischen einer Auflagefläche (39) des Ventilgehäuses (5) und Rastnasen (21) des Ventilgehäuses (5) axial fixiert ist.

13. Belüftungsventil nach einem der Ansprüche 1 bis 12,
**dadurch gekennzeichnet, dass** die Dicke (d) des weiteren Filterelementes (33) 5 bis 10 % der Dicke (D) des Filterkörpers (30) entspricht.

## Claims

1. Aerating valve for a fluid container (1),
comprising a valve housing (5)
• and a valve member located in the valve housing (5),
• wherein the valve member controls a pressure compensation passage (16) connecting the container interior (15) to the outside of the container,
• and further comprising an air-permeable filter body (30) held in the valve housing (5),
• wherein the filter body (30) covers the pressure compensation passage (16),
• and a side of the filter body (30) faces the container interior (15),
**characterised in that**
• the filter body (30) is covered by a further filter element (33) on the side facing the container interior (15),
• the further filter element (33) is designed as a securing element (26) for the filter body (33),
• and the further filter element (33) closes the opening of the valve housing (5) to the container interior (15).

2. Aerating valve according to claim 1,
**characterised in that** the material of the filter body (30) has a first pore size (34) and the material of the further filter element (33) has a second pore size (35), the second pore size (35) of the further filter element (33) being smaller than the first pore size (34) of the filter body (30).

3. Aerating valve according to claim 1 or 2,
**characterised in that** the further filter element (33) is made of a synthetic fibre fabric.

4. Aerating valve according to claim 3,
**characterised in that** the synthetic fibre fabric is a polyester spunbond fabric.

5. Aerating valve according to any of claims 1 to 4,
**characterised in that** the further filter element (33) completely covers the side of the filter body (30) which faces the container interior (15).

6. Aerating valve according to claim 1,
**characterised in that** the filter body (30) is a foam filter.

7. Aerating valve according to claim 6,
**characterised in that** the foam filter is cylindrical.

8. Aerating valve according to any of claims 1 to 7,
**characterised in that** the further filter element (33) is a stamped part.

9. Aerating valve according to any of claims 1 to 8,
**characterised in that** the further filter element (33) is a flexible moulding.

10. Aerating valve according to any of claims 1 to 9,
**characterised in that** the securing element (26) is designed as a retaining washer (27).

11. Aerating valve according to claim 10,
**characterised in that** the securing element (26) is designed as a circular retaining washer (27).

12. Aerating valve according to any of claims 1 to 11,
**characterised in that** the securing element (26) is axially located between a contact surface (39) of the valve housing (5) and latching lugs (21) of the valve housing (5).

13. Aerating valve according to any of claims 1 to 12,
**characterised in that** the thickness (d) of the further filter element (33) corresponds to 5% to 10% of the thickness (D) of the filter body (30).

## Revendications

1. Soupape d'aération pour un récipient de liquide (2),
avec une enveloppe de soupape (5)
• ainsi qu'un organe de soupape disposé dans l'enveloppe de soupape (5),
• l'organe de soupape commandant un conduit d'équilibrage de pression (16) qui relie l'espace intérieur (15) du récipient au côté extérieur du récipient,
• et avec un corps filtrant (30) perméable à l'air et retenu dans l'enveloppe de soupape (5),
• le corps filtrant (30) couvrant le conduit d'équilibrage de pression (16),
• et un côté du corps filtrant (30) étant tourné vers l'intérieur (15) du récipient,
**caractérisée**
• **en ce que** le corps filtrant (30), sur son côté tourné vers l'intérieur (15) du récipient, est couvert par un autre élément filtrant (33),
• **en ce que** ledit autre élément filtrant (33) est conçu comme un élément de sécurité (26) pour le corps filtrant (33),
• **en ce que** ledit autre élément filtrant (33) obture l'ouverture de l'enveloppe de soupape (5) vers l'espace intérieur (15) du récipient.

2. Soupape d'aération selon la revendication 1,
**caractérisée en ce que** le matériau du corps filtrant (30) présente une première taille de pores (34), et le matériau de l'autre élément filtrant (33) présente une seconde taille de pores (35), la seconde taille de pores (35) de l'autre élément filtrant (33) étant plus petite que la première taille de pores (34) du corps filtrant (30).

3. Soupape d'aération selon la revendication 1 ou 2,
**caractérisée en ce que** l'autre élément filtrant (33) se compose d'un tissu de fibres synthétiques.

4. Soupape d'aération selon la revendication 3,
**caractérisée en ce que** le tissu de fibres synthétiques est une nappe non tissée en polyester.

5. Soupape d'aération selon l'une des revendications 1 à 4,
**caractérisée en ce que** l'autre élément filtrant (33) couvre entièrement le côté du corps filtrant tourné vers l'intérieur (15) du récipient.

6. Soupape d'aération selon la revendication 1,
**caractérisée en ce que** le corps filtrant (30) est un filtre en mousse.

7. Soupape d'aération selon la revendication 6,
**caractérisée en ce que** le filtre en mousse est cylindrique.

8. Soupape d'aération selon l'une des revendications 1 à 7,
**caractérisée en ce que** l'autre élément filtrant (33) est une pièce découpée.

9. Soupape d'aération selon l'une des revendications 1 à 8,
**caractérisée en ce que** l'autre élément filtrant (33) est une pièce moulée élastique en flexion.

10. Soupape d'aération selon l'une des revendications 1 à 9,
**caractérisée en ce que** l'élément de sécurité (26) est conçu comme une rondelle de sécurité (27).

11. Soupape d'aération selon la revendication 10,
**caractérisée en ce que** l'élément de sécurité (26) est conçu comme une rondelle de sécurité ronde (27).

12. Soupape d'aération selon l'une des revendications 1 à 11,
**caractérisée en ce que** l'élément de sécurité (26) est fixé axialement entre une surface d'appui (39) de l'enveloppe de soupape (5) et des saillies d'encliquetage (21) de l'enveloppe de soupape (5).

13. Soupape d'aération selon l'une des revendications 1 à 12,
**caractérisée en ce que** l'épaisseur (d) de l'autre élément filtrant (33) correspond à 5 à 10% de l'épaisseur (D) du corps filtrant (30).
